# EUROPÄISCHE PATENTSCHRIFT

(11) **EP 2 385 021 B1**
(45) Veröffentlichungstag und Bekanntmachung des Hinweises auf die Patenterteilung: **22.03.2017**
(21) Anmeldenummer: 11159797.7
(22) Anmeldetag: 25.03.2011
(51) Int. Cl.: C02F 1/44, B08B 3/14

(54) **VERFAHREN UND VORRICHTUNG ZUM RECYCELN VON REINIGUNGS- ODER SPÜLWASSER, INSBESONDERE RINSERWASSER**
METHOD AND DEVICE FOR RECYCLING CLEANING OR RINSING WATER, IN PARTICULAR RINSER WATER
PROCÉDÉ ET DISPOSITIF DE RECYCLAGE D'EAU DE NETTOYAGE OU DE RINÇAGE, NOTAMMENT EAU DE RINCEUSE

(30) Priorität: 03.05.2010 DE 102010028487
(43) Veröffentlichungstag der Anmeldung: 09.11.2011
(73) Patentinhaber: Krones AG, 93073 Neutraubling (DE)
(72) Erfinder: Scheu, Dirk, 86735 Amerdingen (DE); Hackl, Florian, 93138 Lappersdorf (DE); Schlaipfer, Dirk, 48268 Greven (DE)
(74) Vertreter: Grünecker Patent- und Rechtsanwälte PartG mbB

(56) Entgegenhaltungen:
- DE-A1- 19 517 473
- DE-A1- 19 625 184
- DE-A1-102008 052 001
- DE-U1- 29 808 174
- JP-A- 2006 289 283
- SCHARNAGL N ET AL: "Recycling of washing waters from bottle cleaning machines using membranes", DESALINATION, ELSEVIER, AMSTERDAM, NL, Bd. 131, Nr. 1-3, 20. Dezember 2000 (2000-12-20), Seiten 55-63, XP004306338, ISSN: 0011-9164, DOI: 10.1016/S0011-9164(00)90006-7

## Beschreibung

Die Erfindung betrifft ein Verfahren und eine Vorrichtung zum Recyceln von Reinigungs- oder Spülwasser, insbesondere Rinserwasser.

Aus der Druckschrift DE 10 2008 052 001 A1 ist bereits ein Verfahren zur Wasserbehandlung bekannt, wobei Wasser in einem Wasserbehandlungssystem aufbereitet wird und über eine Leitung einer Spülvorrichtung zugeleitet wird. Statt nun das Rinserwasser dem Kanal zuzuführen, wird hier eine Einrichtung zur Wasserbehandlung bereitgestellt, mit einer Vorrichtung zur elektromagnetischen Bestrahlung, einer Umkehrosmosevorrichtung und einer Elektroentionisierungsvorrichtung. Das aufbereitete Wasser kann dann über eine Leitung erneut der Spüleinrichtung zugeführt werden. Hier wird jedoch kein Konzentrat einer Umkehrosmoseanlage und Reinigungs- oder Spülwasser zusammengeleitet, um dann filtriert zu werden.

Die Druckschrift DE 19 517 473 A1 beschreibt bereits ein Verfahren zur Abwasseraufbereitung unter Gewinnung von Trinkwasser. Dabei kommt ein mehrstufiges Membrantrennverfahren zum Einsatz, wobei das verbrauchte Wasser als Frischwasser für weitere Wasch- und Reinigungsschritte verwendet werden kann.

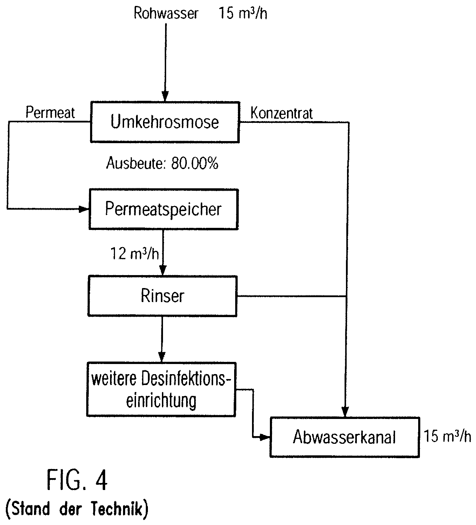

Beim Reinigen oder Spülen von Lebensmittelbehältern, insbesondere Flaschen, fallen große Abwassermengen an. In Fig. 4 wird dies insbesondere im Zusammenhang mit dem Rinsen von PET-Flaschen oder auch Glasflaschen bei der kaltaseptischen Abfüllung beschrieben. Mit der kaltaseptischen Abfüllung von mikrobiologisch sensiblen Getränken und Produkten, lässt sich ohne Zusatz von Konservierungsstoffen und ohne Heißabfüllung eine lange Haltbarkeit der Lebensmittel erzielen. Dabei werden die Behälter bzw. die Flaschen vor dem Abfüllen zur Desinfektion mit einem Rinser mit einer Desinfektionslösung gerinst. Anschließend kann die entkeimte Flasche einem Füller zugeführt, befüllt und verschlossen werden. Für das Rinsen wird zunächst Rohwasser einer Umkehrosmoseanlage zugeführt und entsalzt. Das Konzentrat, das bei der Umkehrosmose anfällt, wird verworfen und dem Abwasserkanal zugeführt. Das Permeat wird in einem Hygienecenter aufbereitet, wobei das Permeat mit einem Desinfektionsmittel und gegebenen falls einem Tensid versetzt wird und schließlich dem Rinser zugeführt wird. Ein Teil des im Rinser verwendeten Rinserwassers wird ebenfalls dem Abwasserkanal zugeführt. Ein weiterer Teil wird noch zur Verschlusskappendesinfektion verwendet und anschließend im Abwasserkanal verworfen.

Bei diesen Verfahren entsteht eine große Menge Abwasser. Ein entsprechendes Verfahren ist somit aus wirtschaftlichen und Umweltgesichtspunkten sehr nachteilig.

Auch in Flaschenreinigungsmaschinen fallen große Mengen an Abwasser an, die die Prozesskosten unnötigerweise erhöhen.

Hiervon ausgehend liegt der vorliegenden Erfindung die Aufgabe zugrunde, ein Verfahren und eine Vorrichtung zum Recyceln von Reinigungs- oder Spülwasser, insbesondere Rinserwasser, bereitzustellen, die die Abwassermenge wesentlich auf einfache Art und Weise reduzieren.

Erfindungsgemäß wird diese Aufgabe durch die Merkmale der Ansprüche 1 und 8 gelöst.

Gemäß der Erfindung werden also die anfallenden Abwasserströme aus dem Rinser und aus der Umkehrosmoseanlage nicht mehr verworfen sondern gesammelt und dabei in einem bestimmten Verhältnis gemischt. Dabei kann der Zusatz, z.B. ein saurer Zusatz in Form einer Peroxyessigsäure bzw. deren Zersetzungsprodukt Essigsäure, mit den im Konzentrat der Umkehrosmoseanlage enthaltenen Salzen, z.B. zu Acetaten reagieren. Somit können die Zusätze in eine durch Membrantechnik abtrennbare Form gebracht werden und durch eine nachgeschaltete Umkehrosmoseanlage entfernt werden. Somit geht das verwendete Reinigungs- oder Spülwasser, z.B. Rinserwasser, und auch das Konzentrat, d.h. das salzhaltige Wasser aus der Umkehrosmose, nicht mehr verloren sondern kann effektiv wiederverwendet werden. Es ergibt sich eine Abwasserreduktion von ca. 40 bis 60 % im Vergleich zum Stand der Technik.

Für eine einfache Prozessführung ist es vorteilhaft, wenn das Konzentrat der Umkehrosmoseanlage aus dem Schritt a), in dem das Wasser filtriert wurde, mit dem verwendeten Reinigungs- oder Spülwasser zusammengeleitet wird. Bei größeren Anlagen oder mehreren Anlageabschnitten ist es jedoch auch möglich dass das Konzentrat einer anderen Umkehrosmoseanlage dem verbrauchten Reinigungs- oder Spülwasser zugesetzt wird.

Gemäß einer bevorzugten Ausführungsform ist der Zusatz ein saurer Zusatz.

Vorteilhafterweise kann also das Permeat, das im Schritt e) bei der Umkehrosmose aus der Mischung gewonnen wird, im Kreislauf rückgeführt und erneut zum Reinigen oder Spülen verwendet werden. Dieses Permeat kann dabei entweder vor, während oder nach Schritt b), d.h. vor, während oder nachdem das Permeat mit dem Zusatz versetzt wird, rückgeführt werden. Durch diesen Kreislauf ergibt sich eine besonders vorteilhafte Prozessführung, da der ersten Umkehrosmoseanlage in Schritt a) von Anfang an weniger Rohwasser zugeführt werden kann und entsprechend weniger Permeat erzeugt werden muss, da die restliche Permeatmenge über die Rückgewinnung des verbrauchten Reinigungs- oder Spülwassers bzw. des Konzentrats gewonnen wird. Die Umkehrosmoseanlage kann daher entsprechend kleiner dimensioniert werden. Rohwasser kann eingespart werden. Somit ergibt sich der Vorteil, dass der Einrichtung zum Spülen oder Reinigen, d.h. dem Rinser ein Volumenstrom an Flüssigkeit zugeführt werden kann der größer ist als der Volumensstrom an Rohwasser der dem System zugeführt wird.

Gemäß einer bevorzugten Ausführungsform ist das Reinigungs- oder Spülwasser Rinserwasser zum Rinsen von Flaschen, insbesondere PET-Flaschen bei der kaltaseptischen Abfüllung. Vorteilhafterweise umfasst der saure Zusatz dann beispielsweise eine Polycarbonsäure oder deren Derivate, vorteilhafterweise Peroxyessigsäure. Mögliche Derivate sind dem Fachmann geläufig und können aus entsprechenden Prozesswasserzusätzen ausgewählt werden, z.B. Peroxycarbonsäureester oder Dicarbonsäureperoxide. Die Polycarbonsäure, z.B. die Peroxyessigsäure, existiert im Gleichgewicht zwischen Essigsäure und Wasserstoffperoxid. Durch Zugabe des Konzentrats kann dann beispielsweise die Essigsäure zu einem Acetat reagieren. Somit kann die Peroxycarbonsäure, insbesondere die Peroxyessigsäure, die selbst mit herkömmlichen Wasserbehandlungsverfahren, wie beispielsweise Umkehrosmoseanlage, nicht entfernt werden konnte, durch die nachfolgende Umkehrosmose abgetrennt werden.

Es ist vorteilhaft, wenn in Schritt b), d.h. beim Zusammenleiten des Konzentrats sowie des verbrauchten Spül- oder Reinigungswassers, zusätzlich Rohwasser zugeführt wird. Durch die zusätzliche Zugabe von Rohwasser kann die Säure im Reinigungs- oder Spülwasser weiter verdünnt werden und zusätzlich können Verluste im Prozesskreislauf kompensiert werden. Durch die Zugabe von Rohwasser zur Mischung kann ein bestimmtes Verhältnis von Konzentratmenge aus der ersten Umkehrosmoseanlage zur Menge des verwendeten Reinigungs- oder Spülwassers eingestellt werden.

Gemäß einer bevorzugten Ausführungsform wird ein Teil des verwendeten Rinserwassers entsprechend Schritt d) mit dem Konzentrat einer Umkehrosmoseanlage gemischt und ein weiterer Teil, also z.B. der Rest, zur weiteren Desinfektion, insbesondere zur Verschlusskappendesinfektion oder Flaschendesinfektion oder Fülleraußendesinfektion verwendet. Somit kann das bereits gebrauchte Rinserwasser z.B. noch zur Verschlusskappendesinfektion verwendet werden und erst danach verworfen werden. Somit geht nur das Wasser, das beim Rinsen der Flaschen verschleppt wird sowie das Wasser für die weitere Desinfektion, z.B. Verschlusskappendesinfektion verloren.

Gemäß einer besonders bevorzugten Ausführungsform wird das verwendete Reinigungs- oder Spülwasser oder aber auch die Mischung aus beiden einer heterogenen Katalyse unterzogen. Dabei werden die Lösungen beispielsweise mit Silber katalysiert, so dass die Zersetzungsreaktion des Zusatzes wesentlich beschleunigt wird. Durch den Katalysator kann beispielsweise der Abbau von Wasserstoffperoxid deutlich beschleunigt werden. Da beispielsweise die Peroxyessigsäure mit Wasserstoffperoxid und Essigsäure im Gleichgewicht vorliegt und die Reaktion dem Massenwirkungsgesetz unterliegt, verläuft die Reaktion durch den katalytischen Abbau des Wasserstoffperoxids in Richtung Essigsäure, so dass der Peroxyessigsäureabbau und letztlich auch die Acetatbildung beschleunigt wird. Das katalytische Verfahren besitzt den Vorteil, dass keine zusätzlichen Chemikalien (Reduktionsmittel) bei der Umsetzung verbraucht werden. Feststoffkatalysatoren lassen sich darüber hinaus einfach abtrennen.

Die erfindungsgemäße Vorrichtung umfasst eine Umkehrosmoseanlage zum Filtern von Rohwasser. Ferner ist beispielsweise in einem Hygienecenter eine Einrichtung zum Versetzen des in der Umkehrosmose erzeugten Permeats mit dem Zusatz vorgesehen, um so Spül- oder Reinigungswasser zu erzeugen. Ferner umfasst die Vorrichtung eine Spül- oder Reinigungseinrichtung zum Spülen oder Reinigen von Lebensmittelbehältern, insbesondere Flaschen. Ein Auffangbehälter ist vorgesehen, in dem zumindest ein Teil des verwendeten Spül- oder Reinigungswassers sowie Konzentrat aus der Umkehrosmose aufgefangen werden können, um so z.B. die Peroxyessigsäure in eine durch Membrantechnik abtrennbare Form zu bringen. Schließlich ist eine weitere Umkehrosmoseanlage vorgesehen, die die Mischung aus dem Auffangbehälter filtriert und somit Permeat erzeugt, das wieder für die Spül- oder Reinigungseinrichtung verwendet werden kann.

Dazu weist die Anlage eine Rückführleitung auf, zum Rückführen des Permeats aus der Umkehrosmoseanlage.

Gemäß einer bevorzugten Ausführungsform weist die Vorrichtung noch einen Reaktor für eine heterogene Katalyse auf, der derart angeordnet ist, dass das verwendete Reinigungs- oder Spülwasser oder aber erst die Mischung aus dem verwendeten Reinigungs- oder Spülwasser und dem Konzentrat einer heterogenen Katalyse unterzogen werden kann. Wenn die Mischung einer heterogenen Katalyse unterzogen wird, dann kann der Reaktor auch den Auffangbehälter umfassen. Der Reaktor kann auch nach dem Auffangbehälter angeordnet sein.

Gemäß einem bevorzugten Ausführungsbeispiel ist die Spül- oder Reinigungseinrichtung ein Rinser zum Rinsen von Flaschen bei der kaltaseptischen Abfüllung. Einem solchen Rinser ist dann vorteilhafterweise eine weitere Desinfektionseinrichtung, insbesondere eine Verschlusskappendesinfektionseinrichtung oder eine Flaschenaußendesinfektionseinrichtung oder eine Fülleraußendesinfektionseinrichtung nachgeschaltet, die mit einem Teil des im Rinser verwendeten Rinserwassers z.B. die Verschlusskappen oder Flaschenaußenseiten oder Fülleraußenseiten desinfiziert.

Ferner weist die Vorrichtung eine Zuleitung auf, über die dem Auffangbehälter Rohwasser zugeführt werden kann.

Schließlich weist die Vorrichtung vorteilhafterweise einen Permeatspeicher auf, in den das Permeat über die Rückführleitung rückgeführt werden kann. Vorteilhafterweise kann in diesen Permeatspeicher auch das Permeat aus der Umkehrosmose zum Entsalzen von Rohwasser eingeführt werden.

Die Erfindung wird nachfolgend unter Bezugnahme der folgenden Figuren näher erläutert.
- Fig. 1: zeigt schematisch den Aufbau einer Vorrichtung gemäß einer ersten Ausführungsform der vorliegenden Erfindung.
- Fig. 2: zeigt schematisch den Aufbau eines zweiten Ausführungsbeispiels gemäß der vorliegenden Erfindung.
- Fig. 3: zeigt schematisch den Aufbau einer dritten Ausführungsform der vorliegenden Erfindung.
- Fig. 4: zeigt schematisch den Stand der Technik.

Die vorliegende Erfindung wird insbesondere im Zusammenhang mit dem Rinsen von Flaschen (PET-Flaschen) bei der kaltaseptischen Abfüllung beschrieben. Mit der kaltaseptischen Abfüllung von mikrobiologisch sensiblen Getränkeprodukten lassen sich ohne Zusatz von Konservierungsstoffen und ohne Heißabfüllung eine lange Haltbarkeit der Lebensmittel erzielen. Dabei werden die Behälter bzw. die Flaschen, die in unverschlossenem Zustand transportiert werden, zur Desinfektion mit einem Rinser mit einer Desinfektionslösung gerinst d.h. deren Oberfläche abgespült. Anschließend kann die entkeimte Flasche einem Füller zugeführt, befüllt und verschlossen werden.

Die Vorrichtung umfasst eine Rohwasserversorgung 6 über die Rohwasser, z.B. Leitungswasser, zugeführt werden kann. Ferner weist die Vorrichtung eine Umkehrosmoseanlage 1 auf, mit der das Rohwasser gefiltert bzw. entsalzt wird, so dass die Leitfähigkeit des Wassers möglichst kleiner 10 µS/cm aufweist. Über eine Leitung 9 ist die Umkehrosmoseanlage mit einem Hygienecenter 10 verbunden, in dem Permeat P1 aus der Umkehrosmoseanlage 1 mengenproportional Desinfektionsmittel beispielsweise in Form eines sauren Zusatzes und gegebenenfalls auch Tensid beigemischt wird. Es ist auch möglich, einen nicht sauren sanitisierenden Zusatz zu verwenden. Das nachfolgende Ausführungsbeispiel wird jedoch mit einem sauren Zusatz beschrieben. Das Hygienecenter 10 kann einen Permeatspeicher 11 aufweisen, in dem das Permeat zwischengespeichert werden kann. Aus dem Hygienecenter 10 bzw. dem Permeatspeicher 11 kann das so hergestellte Reinigungs- oder Spülwasser, hier Rinserwasser, einer Spül- oder Reinigungseinrichtung 2, hier dem Rinser 2, zum Rinsen von Lebensmittelbehältern, hier insbesondere PET-Flaschen, geleitet werden.

Der Rinser 2 kann Teil einer Abfüllanlage sein, die außerdem Füller und Verschließer aufweist. Auch wenn hier nicht dargestellt, kann über eine geeignete Transporteinrichtung der entkeimte Behälter bzw. die entkeimte Flasche dem Füller zugeführt und gefüllt werden. Im Verschließer wird das Behältnis dann durch Aufbringen von Verschlusskappen, die zuvor desinfiziert wurden, verschlossen. Dazu weist die Vorrichtung vorteilhafterweise eine weitere Desinfektionseinrichtung, z.B. in Form einer Verschlusskappendesinfektionseinrichtung 3 auf, die im Rinser 2 verwendete Rinserwasser auf die Verschlusskappen aufbringt. Über eine Leitung 18 kann das verbrauchte Rinserwasser von der Desinfektionseinrichtung 3 einem Abwasserkanal 4 zugeführt werden. Es ist auch möglich, dass die Desinfektionseinrichtung in Form einer Einrichtung zur Flaschenaußendesinfektion oder Fülleraußendesinfektion vorliegt.

Ferner ist eine Leitung 12 vorgesehen, über die Konzentrat (salzhaltige Lösung) von der Umkehrosmoseanlage 1 einem Auffangbehälter 5 zugeführt werden kann. Über eine Leitung 13 kann verbrauchtes Rinserwasser ebenfalls dem Auffangbehälter 5 zugeführt werden. Vom Auffangbehälter führt eine Leitung 19 zu einer weiteren Umkehrosmoseanlage 7, über die die Mischung aus dem Auffangbehälter 5 gefiltert werden kann. Über eine Leitung 15 kann Konzentrat K2 dem Abwasserkanal 4 zugeführt werden. Das Permeat P2 aus der Umkehrosmoseanlage 7 kann dann über eine Rückführleitung 8 rückgeführt werden, um erneut für den Rinser 2 verwendet zu werden. Die Rückführleitung 8 kann dabei das Permeat P2 dem Permeat P1 entweder vor der Einrichtung 10 zum Versetzen des Permeats mit saurem Zusatz, z.B. in die Leitung 9 zugeführt werden oder aber danach in den Leitungsabschnitt 17 oder aber in dieser Einrichtung 10, 11, beispielsweise in den Permeatspeicher 11. Wesentlich ist, dass das Permeat P2 derart rückgeführt wird, dass es erneut als Desinfektionsmittel im Rinser 2 eingesetzt werden kann.

Ferner umfasst die Vorrichtung noch eine Leitung 14, über die Rohwasser aus der Rohwasserversorgung 6 dem Auffangbehälter 5 zugeführt werden kann.

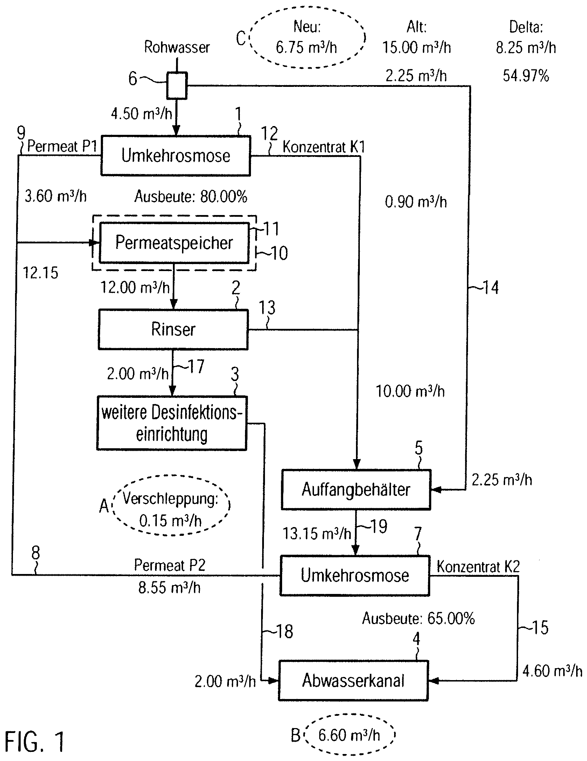

Das vorliegende Verfahren wird nachfolgend unter Bezugnahme der Fig. 1 näher erläutert.

Zunächst wird Rohwasser aus der Rohwasserversorgung 6 einer Umkehrosmoseanlage 1 mit einem bestimmten Volumenstrom, z.B. 4,5 m³/Stunde zugeführt. Das Rohwasser, das der Umkehrosmoseanlage 1 zugeführt wird, ist jedoch nur ein Teil der Rohwassermenge, die insgesamt zum Rinsen benötigt wird. Die Differenz zwischen dem der Umkehrosmoseanlage 1 zugeführten Wassermenge und der insgesamt benötigten Wassermenge C wird dem System über die Leitung 14 (d.h. über den Auffangbehälter 5) zugeführt, wie nachfolgend noch näher erläutert wird.

Die gesamte Menge an Rohwasser C, die für den Reinigungs- oder Spülprozess notwendig ist, setzt sich also zusammen aus Rohwasser, das der Umkehrosmoseanlage zugeführt wird und Rohwasser, das noch der Mischung aus verwendetem Reinigungs- oder Spülwasser und Konzentrat zugeführt wird.

Bei diesem konkreten Ausführungsbeispiel werden 2,25 m³/h an Rohwasser dem Auffangbehälter 5 zugeführt, so dass sich eine Gesamt-Rohwasserzufuhr von 6,75 m³/h ergibt. Beim Stand der Technik mussten für einen vergleichbaren Prozess 15 m³/h zugeführt werden, so dass sich eine Differenz von 8,25 m³/h ergibt. Dies ergibt eine Einsparung von 54,97 %.

Das Rohwasser wird in der Umkehrosmoseanlage 1 gefiltert bzw. entsalzt, so dass die Leitfähigkeit möglichst kleiner 10 µS/cm² beträgt. Die Ausbeute liegt hier zwischen 75% und 85 %, d.h. dass 15 -25 % des Rohwassers zu Konzentrat werden. Das Permeat P1 wird über die Leitung 9 dem Hygienecenter 10 zugeführt, um dort mit Desinfektionsmittel versetzt zu werden. Der Volumenstrom des Permeats P1 beträgt hier 3,6 m³/h.

Bei diesem Ausführungsbeispiel wird das Permeat P1 einem Permeatspeicher 11 zugeführt. Dem Permeat P1 wird mengenproportional Desinfektionsmittel zugeführt und gegebenenfalls auch Tensid. Als Tensid ist beispielsweise ein nicht ionisches geeignet. Die Tensidkonzentration kann in einem Bereich bis 1000 ppm liegen.

Beim Rinsen von Flaschen eignet sich besonders gut Peroxyessigsäure als Desinfektionsmittel. Wie aus der nachfolgenden Gleichung 1 hervorgeht, existiert Peroxyessigsäure (PES) im Gleichgewicht zwischen Essigsäure und Wasserstoffperoxid (WPO).

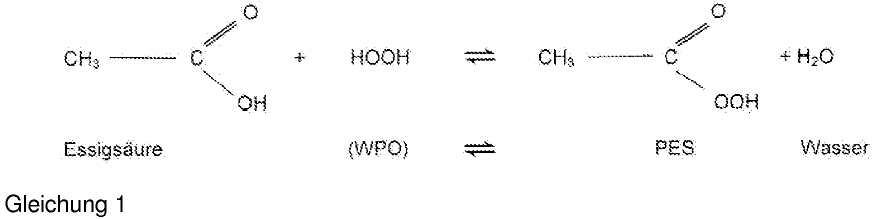

Kommerziell erhältlich ist Gleichgewicht-Peroxyessigsäure in Konzentrationen zwischen 2,5 % und 40 % erhältlich. Mengenmäßig wird dem Permeat P1 pro Liter beispielsweise 500 bis 3000 ppm Peroxyessigsäure zugefügt.

Zur Erzeugung der Reinigungs- oder Spüllösung wird zusätzlich noch das Permeat P2 über die Leitung 8 zugeführt, wobei das Permeat P2 wie später noch beschrieben wird, gewonnen wird. Dem Permeat P2 wird entweder zusammen mit dem Permeat P1 der saure Zusatz, hier die Peroxyessigsäure, zugesetzt oder aber separat. Es ist auch möglich, das Permeat P2 dem Permeat P1, dem bereits der saure Zusatz, hier die Peroxyessigsäure, zugesetzt wurde, zuzuführen, so dass sich dann die gewünschte Konzentration einstellt.

Dieses Beispiel wird im Zusammenhang mit Peroxyessigsäure beschrieben. Gleichermaßen sind jedoch auch andere Peroxycarbonsäuren und Derivate geeignet. Mögliche Derivate sind dem Fachmann geläufig und können aus entsprechenden Prozesswasserzusätzen ausgewählt werden, z.B. Peroxycarbonsäureester oder Dicarbonsäureperoxide.

Das fertige Rinserwasser wird dann dem Rinser 2 zugeführt. Im Rinser 2 werden die Lebensmittelbehälter bzw. Flaschen mit dem Rinserwasser von innen und außen benetzt, d.h. berinst, und somit keimfrei gemacht. Wie bereits beschrieben, werden die keimfreien Flaschen dann zu einem Füller transportiert.

Dem Rinser 2 wird eine Rinserwassermenge von 12 m³/h zugeführt. Das gebrauchte Rinserwasser wird aufgefangen und es wird mindestens ein Teil davon, z.B. 10 m³/h über die Leitung 13 dem Auffangbehälter 5 zugeführt. Das Konzentrat aus der Umkehrosmoseanlage 1 wird über die Leitung 12 dem Auffangbehälter 5 hier mit einem Volumenstrom von 0,9 m³/h zugeführt. Das Mischverhältnis der Konzentratmenge zur Menge an Spül- und Reinigungswasser liegt dabei für den vorliegenden Fall in Abhängigkeit der Rohwasserzusammensetzung beispielsweise in einem Bereich von 1 zu 10. Entsprechend wird zusätzlich Rohwasser über die Leitung 14 in den Auffangbehälter 5 geleitet. Hier beträgt der Volumenstrom des Rohwassers 2,25 m³/Stunde.

Die Anfangsprozessbedingungen werden so eingestellt, dass der Füllstand im Auffangbehälter 5 bis zu einem bestimmten Niveau ansteigt, so dass sich eine bestimmte Verweilzeit z.B. 30 bis 120 min im Auffangbehälter 5 ergibt, um eine Reaktion des sauren Zusatzes mit dem Salz im Konzentrat zu ermöglichen. Im Auffangbehälter können also die Peroxyessigsäure bzw. die Essigsäure mit den Salzen des Konzentrats K1 zu Acetaten reagieren, die durch Membrantechnik abtrennbar sind. Salze im Konzentrat sind beispielsweise Calciumacetat oder Calciumhydrogencarbonat. Die Salzkonzentration im Konzentrat liegt etwa bei dem 6 bis 8 fachen des Rohwassers.

Die Mischung wird dann einer weiteren Umkehrosmoseanlage 7 zugeführt, hier mit einem Volumenstrom von 13,15 m³/Stunde. Da die Peroxyessigsäure, nun in eine abtrennbare Form gebracht wurde, kann sie durch die Umkehrosmoseanlage ausgefiltert werden, wobei das Konzentrat K2 über die Leitung 15 dann dem Abwasserkanal 4 hier mit einem Volumenstrom von 4,6 m³/Stunde zugeführt wird. Die Ausbeute der Umkehrosmose liegt hier in einem Bereich von 60%-70%, d.h., dass 30 - 40 % der zu filternden Flüssigkeit als Konzentrat abgeleitet wird.

Das restliche vom Rinser verbrauchte Rinserwasser wird, z.B. für die Verschlusskappendesinfektion verwendet, wobei hier 2 m³/h der Verschlusskappendesinfektion zugeführt werden. Das in der Verschlusskappendesinfektionseinrichtung 3 verbrauchte Rinserwasser 20 wird dann ebenfalls dem Abwasserkanal 4 mit einem Volumenstrom von 2 m³/Stunde zugeführt. Statt zur Verschlusskappendesinfektion kann der Rinserwasserrest auch einer anderen Desinfektionseinrichtung 3 zugeführt und dann verworfen werden Somit ergibt sich, dass eine Gesamtmenge B von 6,6 m³/h dem Abwasserkanal zugeführt wird. Beim Rinsen der Flaschen bzw. bei der Verschlusskappendesinfektion ergibt sich eine Verschleppung A von 0,15 m³/h. Die Summe aus Verschleppung und der Menge an Abwasser, das dem Abwasserkanal zugeführt wurde, entspricht der zugeführten Rohwassermenge. A+D=C.

Das Permeat P2 aus der Umkehrosmoseanlage 17 wird hier mit einem Volumenstrom von 8,55 m³/h über die Leitung 8 erneut zum Rinsen, wie zuvor beschrieben, zurückgeführt. Es ergibt sich somit ein Gesamt-Permeatstrom von 12,15 m³/h, der dem Permeatspeicher 11 zugeführt wird.

Somit ergibt sich der Vorteil, dass der Einrichtung zum Spülen oder Reinigen, d.h. im Rinser 2 ein größerer Volumenstrom an Flüssigkeit zugeführt werden kann als Rohwasser dem System zugeführt wird.

Auch die Tenside werden über die Umkehrosmoseanlage 7 abgeschieden.

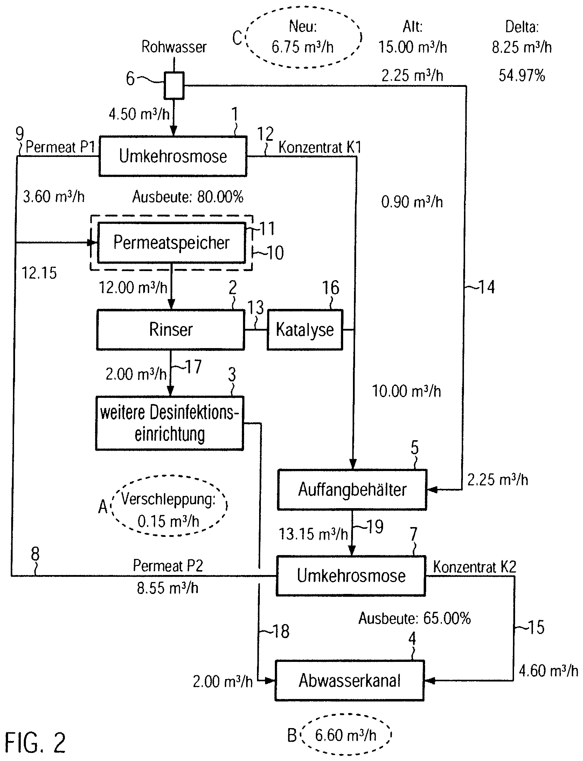

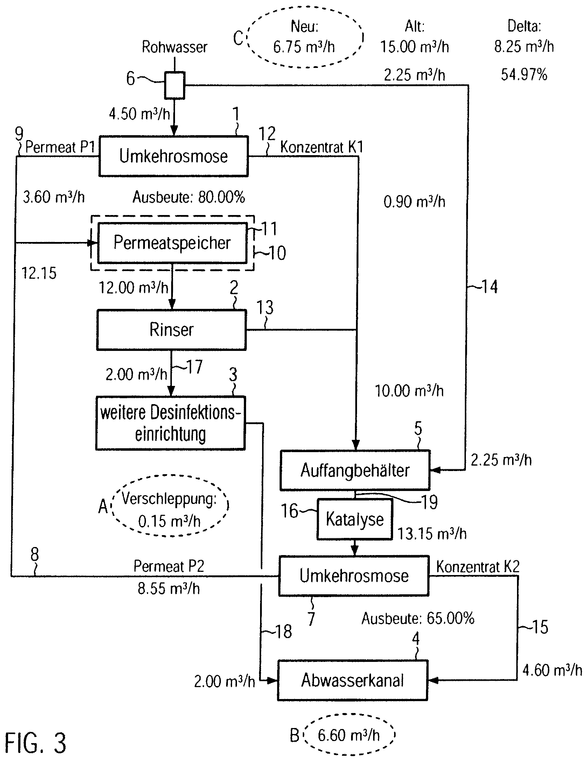

Fig. 2 und 3 sind eine weitere Ausführungsform der vorliegenden Erfindung. Diese Ausführungsformen stimmen mit der in Fig. 1 gezeigten Ausführungsform überein mit der Ausnahme, dass zusätzlich ein Reaktor 16 zur heterogenen Katalyse vorgesehen ist. Der Reaktor für die heterogene Katalyse 16 kann wie in Fig. 2 gezeigt, in der Leitung 13 vorgesehen sein, so dass das verwendete Reinigungs- oder Spülwasser der heterogenen Katalyse unterzogen werden kann. Wie in Fig. 3 gezeigt ist, kann der Reaktor für die heterogene Katalyse 16 auch derart angeordnet sein, dass die Mischung aus dem verwendeten Reinigungs- oder Spülwasser und dem Konzentrat einer heterogenen Katalyse unterzogen werden kann. Es ist auch möglich, dass der Reaktor 16 den Auffangbehälter umfasst (nicht dargestellt).Ein Reaktor umfasst z.B. einen Reaktionsbehälter, mindestens eine Zuleitung für die Reaktionslösung und mindestens eine Ableitung. Hier wird eine Katalyse mit einem festen Katalysator durchgeführt. So kann die nach der Umsetzung notwendige Katalysatorabtrennung erleichtert werden oder entfallen, wenn es sich z.B. um einen Festbettreaktor handelt. Als heterogener Katalysator eignet sich z.B. Silber. Silber mit einer großen Oberfläche (beispielsweise Granulat) kann die Polycarbonsäure oder deren Derivate, vorteilhafterweise Peroxyessigsäure, schnell abbauen. Wie aus den nachfolgenden Gleichungen 2 und 3 hervorgeht, unterliegt die Peroxyessigsäure einer temperaturabhängigen Zersetzungsreaktion.

**2C₂H₄O₃ → 2C₂H₄O₂ + O₂**

Gleichung 2

**2H₂O₂ → 2H₂O + O₂**

Gleichung 3.

Die Zersetzung kann durch den Einsatz eines Katalysators beschleunigt werden. Peroxyessigsäure ist, wie aus Gleichung 1 hervorgeht, ein Reaktionsprodukt aus Essigsäure und Wasserstoffperoxid. Die Reaktion unterliegt dem Massenwirkungsgesetz. Durch den katalytischen Abbau des Wasserstoffperoxids verläuft die Reaktion nach links. Das katalytische Verfahren besitzt den Vorteil, dass keine zusätzlichen Chemikalien bei der Umsetzung verbraucht werden. Durch den Einsatz des Reaktors für die heterogene Katalyse kann die Umsetzung in eine durch Membrantechnik abtrennbare Form beschleunigt werden, da sich zusammen mit dem Konzentrat beschleunigt Acetate bilden. Weiter wird auch der komplette Abbau von Wasserstoffperoxid zu Wasser und Sauerstoff beschleunigt. Die Verweilzeit im Reaktor kann z. B 1 bis 300 sec betragen.

Bei den in Fig. 2 und 3 gezeigten Ausführungsbeispielen wird die entsprechende Lösung mit hoch reinem Silbergranulat katalysiert.

Die Erfindung wurde im Zusammenhang mit einem Rinser als Spül- oder Reinigungseinrichtung beschrieben. Die Erfindung, nämlich das Zusammenleiten von Konzentrat aus einer Umkehrosmoseanlage mit einem sanitisierenden oder desinfizierenden Mittel, insbesondere mit sauren, vorzugsweise organischen Säuren beladenen Reinigungs- oder Spülabwässern eignet sich jedoch auch für andere Spül- und Reinigungseinrichtungen, die dann anstelle des Rinsers 2 angeordnet sind. Das heißt, dass die vorliegende Erfindung ebenso geeignet ist zum Spülen und Reinigen von Lebensmittelbehältern oder Flaschen, beispielsweise in Flaschenreinigungsmaschinen etc.

## Patentansprüche

1. Verfahren zum Recyceln von Reinigungs- oder Spülwasser, insbesondere Rinserwasser, mit folgenden Schritten:
a) Filtrieren von Rohwasser mittels einer Umkehrosmoseanlage (1),
b) Versetzen des in Schritt a) erzeugten Permeats (P1) mit einem sanitisierend oder desinfizierend wirkenden Zusatz,
c) Verwenden des mit dem Zusatz beladenen Permeats als Reinigungs- oder Spülwasser,
d) Zusammenleiten von mindestens einem Teil des verwendeten Reinigungs- oder Spülwassers und Konzentrat (K1) einer Umkehrosmoseanlage (1) und
e) Filtrieren der in d) erzeugten Mischung (M) mittels Umkehrosmoseanlage (4).

2. Verfahren nach Anspruch 1, **dadurch gekennzeichnet, dass** der Zusatz ein saurer Zusatz ist.

3. Verfahren nach Anspruch 1, **dadurch gekennzeichnet, dass** das Permeat (P2), das in Schritt e) bei der Umkehrosmose gewonnen wird, im Kreislauf vor, während oder nach Schritt b) rückgeführt und erneut zum Reinigen oder Spülen verwendet wird.

4. Verfahren nach mindestens einem der Ansprüche 1-3, **dadurch gekennzeichnet, dass** im Schritt c) das Reinigungs- oder Spülwasser Rinserwasser zum Rinsen von Flaschen bei der kaltaseptischen Abfüllung ist und insbesondere der in Schritt b) zugesetzte saure Zusatz eine Polycarbonsäure oder deren Derivate, vorteilhafterweise Peroxyessigsäure umfasst.

5. Verfahren nach mindestens einem der Ansprüche 1 bis 4, **dadurch gekennzeichnet, dass** in Schritt d) zusätzlich Rohwasser zugeführt wird.

6. Verfahren nach mindestens Anspruch 4, **dadurch gekennzeichnet, dass** nach dem Rinsen ein Teil des verwendeten Rinserwassers entsprechend Schritt d) mit dem Konzentrat einer Umkehrosmoseanlage gemischt wird und ein weiterer Teil zur weiteren Desinfektion, insbesondere zur Verschlusskappendesinfektion, Flaschenaußendesinfektion oder Fülleraußendesinfektion verwendet wird.

7. Verfahren nach mindestens einem der Ansprüche 1 bis 6, **dadurch gekennzeichnet, dass** das verwendete Reinigungs- oder Spülwasser oder die Mischung aus dem verwendeten Reinigungs- oder Spülwasser einer heterogenen Katalyse unterzogen wird.

8. Vorrichtung zum Durchführen des Verfahrens nach mindestens einem der Ansprüche 1 bis 7, mit
- einer Umkehrosmoseanlage (1) zum Filtrieren von Rohwasser,
- einer Einrichtung (10, 11) zum Versetzen des in der Umkehrosmoseanlage (1) erzeugten Permeats (P1) mit einem sanitisierend oder desinfizierend wirkenden Zusatz zur Erzeugung von Spül- oder Reinigungswasser,
- eine Spül- oder Reinigungseinrichtung (2) zum Spülen oder Reinigen von Lebensmittelbehältern, insbesondere Flaschen,
- einen Auffangbehälter (5) zum Aufnehmen zumindest eines Teils des verwendeten Spül- oder Reinigungswassers und Konzentrat (K1) aus der Umkehrosmoseanlage (1) und
- einer Umkehrosmoseanlage (7) zum Filtrieren der Mischung aus dem Auffangbehälter (5).

9. Vorrichtung nach Anspruch 8, wobei die Vorrichtung weiter eine Rückführleitung (8) umfasst; zum Rückführen des Permeats aus der Umkehrosmoseanlage (7), derart, dass das Permeat zum Spülen oder Reinigen des Lebensmittelbehälters wiederverwendet werden kann.

10. Vorrichtung nach Anspruch 8 oder 9, **dadurch gekennzeichnet, dass** die Vorrichtung weiter einen Reaktor für eine heterogene Katalyse (16) umfasst, der derart angeordnet ist, dass das verwendete Reinigungs- oder Spülwasser oder die Mischung aus dem verwendeten Reinigungs- oder Spülwasser und dem Konzentrat einer heterogenen Katalyse unterzogen werden kann.

11. Vorrichtung nach mindestens einem der Ansprüche 8 bis 10, **dadurch gekennzeichnet, dass** die Spül- oder Reinigungseinrichtung (2) ein Rinser zum Rinsen von Flaschen bei der kaltaseptischen Abfüllung ist.

12. Vorrichtung nach mindestens Anspruch 11, **dadurch gekennzeichnet, dass** die Vorrichtung weiter eine weitere Desinfektionseinrichtung (3) umfasst, die mit einem Teil des im Rinser verwendeten Rinserwassers arbeitet, wobei die Desinfektionseinrichtung (3) insbesondere eine Verschlusskappendesinfektionseinrichtung (3), eine Flaschenaußendesinfektionseinrichtung oder eine Fülleraußendesinfektionseinrichtung ist.

13. Vorrichtung nach mindestens einem der Ansprüche 8 bis 12, **dadurch gekennzeichnet, dass** die Vorrichtung weiter eine Zuleitung (14) umfasst, über die dem Auffangbehälter (5) Rohwasser zugeführt werden kann.

14. Vorrichtung nach mindestens einem der Ansprüche 8 bis 13, **dadurch gekennzeichnet, dass** die Vorrichtung einen Permeatspeicher (11) umfasst, in den das Permeat (P2) über die Rückführleitung (8) rückgeführt werden kann.

## Claims

1. Method of recycling cleaning or rinsing water, in particular rinser water, comprising the following steps:
a) filtering raw water by means of a reverse osmosis system (1),
b) mixing the permeate (P1) generated in step a) with an additive acting in a sanitizing or disinfecting manner,
c) using the permeate loaded with the additive as cleaning or rinsing water,
d) joining at least a portion of the used cleaning or rinsing water and the concentrate (K1) of a reverse osmosis system (1), and
e) filtering the mixture (M) generated in d) by means of a reverse osmosis system (4).

2. Method according to claim 1, **characterized in that** the additive is an acidic additive.

3. Method according to claim 1, **characterized in that** the permeate (P2) which is obtained in step e) in the reverse osmosis is returned in the cycle before, during or after step b) and reused for cleaning or rinsing.

4. Method according to at least one of claims 1-3, **characterized in that** in step c), the cleaning or rinsing water is rinser water for rinsing bottles in cold aseptic filling, and in particular the acidic additive added in step b) comprises a polycarboxylic acid or derivatives thereof, advantageously peracetic acid.

5. Method according to at least one of claims 1 to 4, **characterized in that** in step d), raw water is additionally supplied.

6. Method according to at least claim 4, **characterized in that** after rinsing, one portion of the used rinser water corresponding to step d) is mixed with the concentrate of a reverse osmosis system, while another portion is used for further disinfection, in particular for closing cap disinfection, external bottle disinfection or external filler disinfection.

7. Method according to at least one of claims 1 to 6, **characterized in that** the used cleaning or rinsing water or the mixture of the used cleaning or rinsing water are subjected to heterogeneous catalysis.

8. Device for performing the method according to at least one of claims 1 to 7, having
- a reverse osmosis system (1) for filtering raw water,
- an apparatus (10, 11) for mixing the permeate (P1) generated in the reverse osmosis system (1) with an additive acting in a sanitizing or disinfecting manner for generating rinsing or cleaning water,
- a rinsing or cleaning apparatus (2) for rinsing or cleaning food containers, in particular bottles,
- a collection container (5) for receiving at least a portion of the used rinsing or cleaning water and concentrate (K1) from the reverse osmosis system (1), and
- a reverse osmosis system (7) for filtering the mixture from the collection container (5).

9. Device according to claim 8, wherein the device further comprises a return line (8) for returning the permeate from the reverse osmosis system (7), such that the permeate can be reused for rinsing or cleaning the food container.

10. Device according to claim 8 or 9, **characterized in that** the device furthermore comprises a reactor for heterogeneous catalysis (16) which is arranged such that the used cleaning or rinsing water or the mixture of the used cleaning or rinsing water and the concentrate can be subjected to heterogeneous catalysis.

11. Device according to at least one of claims 8 to 10, **characterized in that** the rinsing or cleaning apparatus (2) is a rinser for rinsing bottles in cold aseptic filling.

12. Device at least according to claim 11, **characterized in that** the device furthermore comprises another disinfection apparatus (3) which operates with a portion of the rinser water used in the rinser, where the disinfection apparatus (3) is in particular a closing cap disinfection apparatus (3), an external bottle disinfection apparatus, or an external filler disinfection apparatus.

13. Device at least according to one of claims 8 to 12, **characterized in that** the device furthermore comprises a supply line (14) via which raw water can be supplied to the collection container (5).

14. Device at least according to one of claims 8 to 13, **characterized in that** the device comprises a permeate storage (11) into which the permeate (P2) can be returned via the return line (8).

## Revendications

1. Procédé pour recycler de l'eau de nettoyage ou de lavage, notamment de l'eau de rinceuse, comprenant les étapes suivantes :
a) filtration d'eau brute au moyen d'une installation à osmose inverse (1),
b) mélange du perméat (P1) produit à l'étape a) avec un additif à action sanitisante ou désinfectante,
c) utilisation du perméat chargé de l'additif en tant qu'eau de nettoyage ou de lavage,
d) réunification d'au moins une partie de l'eau de nettoyage ou de lavage utilisée et du concentrat (K1) d'une installation à osmose inverse (1),
e) filtration du mélange (M) produit en d) au moyen d'une installation à osmose inverse (4).

2. Procédé selon la revendication 1, **caractérisé en ce que** l'additif est un additif acide.

3. Procédé selon la revendication 1, **caractérisé en ce que** le perméat (P2) qui a été produit au cours de l'étape e) par l'osmose inverse, est recyclé en circuit, avant, pendant ou après l'étape b) et est à nouveau utilisé pour le nettoyage ou le lavage.

4. Procédé selon l'une au moins des revendications 1-3, **caractérisé en ce que** dans l'étape c) l'eau de nettoyage ou de lavage est de l'eau de rinceuse pour le rinçage de bouteilles lors du remplissage aseptique à froid, et l'additif acide ajouté notamment à l'étape b) comprend un acide polycarbonique ou ses dérivés, avantageusement un acide peracétique ou peroxyacétique.

5. Procédé selon l'une au moins des revendications 1 à 4, **caractérisé en ce que** dans l'étape d), de l'eau brute est amenée en supplément.

6. Procédé selon au moins la revendication 4, **caractérisé en ce qu'**après le rinçage, une partie de l'eau de rinceuse utilisée est mélangée, conformément à l'étape d), au concentrat d'une installation d'osmose inverse, et une autre partie est utilisée pour assurer une désinfection supplémentaire, notamment pour une désinfection de capuchons de fermeture, une désinfection extérieure de bouteilles ou une désinfection extérieure de remplisseurs.

7. Procédé selon l'une au moins des revendications 1 à 6, **caractérisé en ce que** l'eau de nettoyage ou de lavage utilisée ou le mélange de l'eau de nettoyage ou de lavage utilisée est soumis à une catalyse hétérogène.

8. Ensemble pour la mise en oeuvre du procédé selon l'une au moins des revendications 1 à 7, comprenant
- une installation à osmose inverse (1) pour la filtration d'eau brute,
- un dispositif (10, 11) pour mélanger le perméat (P1) produit dans l'installation à osmose inverse (1) avec un additif à action sanitisante ou désinfectante en vue de la production d'eau de lavage ou de nettoyage,
- un dispositif de nettoyage ou de lavage (2) pour le lavage ou le nettoyage de contenants de produits alimentaires, notamment de bouteilles,
- un réservoir de collecte (5) destiné à recevoir au moins une partie de l'eau de lavage ou de nettoyage utilisée et de concentrat (K1) de l'installation à osmose inverse (1), et
- une installation à osmose inverse (7) pour filtrer le mélange en provenance du réservoir de collecte (5).

9. Ensemble selon la revendication 8, l'ensemble comprenant, en outre, une conduite de recyclage (8) pour recycler le perméat de l'installation à osmose inverse (7) de façon à pouvoir réutiliser le perméat pour le lavage ou le nettoyage du contenant de produits alimentaires.

10. Ensemble selon la revendication 8 ou la revendication 9, **caractérisé en ce que** l'ensemble comprend en outre un réacteur pour une catalyse hétérogène (16), qui est agencé de manière à ce que l'eau de nettoyage ou de lavage utilisée ou le mélange de l'eau de nettoyage ou de lavage utilisée et du concentrat, puissent être soumis à une catalyse hétérogène.

11. Ensemble selon l'une au moins des revendications 8 à 10, **caractérisé en ce que** le dispositif de lavage ou de nettoyage (2) est une rinceuse pour rincer des bouteilles lors du remplissage aseptisé à froid.

12. Ensemble selon au moins la revendications 11, **caractérisé en ce que** l'ensemble comprend, en outre, un autre dispositif de désinfection (30), qui travaille avec une partie de l'eau de rinçage utilisée dans la rinceuse, le dispositif de désinfection (3) étant notamment un dispositif de désinfection de capuchons de fermeture (3), un dispositif de désinfection extérieure de bouteilles ou un dispositif de désinfection extérieure de remplisseurs.

13. Ensemble selon l'une au moins des revendications 8 à 12, **caractérisé en ce que** l'ensemble comprend, en outre, une conduite d'alimentation (14), par l'intermédiaire de laquelle de l'eau brute peut être amenée au réservoir de collecte (5).

14. Ensemble selon l'une au moins des revendications 8 à 13, **caractérisé en ce que** l'ensemble comprend un accumulateur de perméat (11) dans le lequel le perméat (P2) peut être recyclé par l'intermédiaire de la conduite de recyclage (8).
